(19) Europäisches Patentamt
European Patent Office
Office européen des brevets

(11) **EP 2 497 918 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(51) Int Cl.:
*F01N 1/08* (2006.01)   *F01N 3/28* (2006.01)
*F01N 13/00* (2010.01)   *F01N 1/16* (2006.01)
*F01N 1/02* (2006.01)   *F02B 27/04* (2006.01)
*F02B 75/02* (2006.01)

(21) Anmeldenummer: **12154952.1**

(22) Anmeldetag: **10.02.2012**

(54) **Schalldämpfer für einen Zweitaktmotor eines Motorarbeitsgerätes**

Acoustic muffler for a two-cycle motor of a motorised work device

Amortisseur de bruit pour un moteur à deux temps d'un appareil de travail motorisé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2011 DE 202011000534 U**

(43) Veröffentlichungstag der Anmeldung:
**12.09.2012 Patentblatt 2012/37**

(73) Patentinhaber: **Makita Corporation**
**Anjo, Aichi 446-8502 (JP)**

(72) Erfinder: **Kellermann, Christian**
**22946 Grande (DE)**

(74) Vertreter: **RGTH**
**Patentanwälte PartGmbB**
**Neuer Wall 10**
**20354 Hamburg (DE)**

(56) Entgegenhaltungen:
**EP-A1- 2 221 458      DE-U1-202008 005 168**
**US-A1- 2002 152 747      US-B1- 6 341 662**

- **Anonym: "Funktionsprinzip eines Zweitaktmotors", Schwabenkart , 15. November 2004 (2004-11-15), XP002698017, Gefunden im Internet: URL:http://schwabenkart.de/KnowHow/2Takte.htm [gefunden am 2013-05-31]**
- **"Resonanzschalldämpfer - Funktion und Setup", Modellbau-Graetz , 1 June 2009 (2009-06-01), Retrieved from the Internet: URL:http://www.modellbau-graetz.de/TippsTechnik/TippsTechnikResorohrSetup.html [retrieved on 2013-05-31]**

## Beschreibung

Die vorliegende Erfindung betrifft einen Schalldämpfer für einen Zweitaktmotor eines Motorarbeitsgerätes, insbesondere für ein handbetriebenes Motorarbeitsgerät wie ein Garten- und Grünanlagenpflegegerät, ein Handwerkzeug wie eine Kettensäge, eine Handkreissäge oder ein Trennschleifer oder für ein Kleinkraftrad, einen Bootsmotor und dergleichen, wobei der Schalldämpfer einen Schalldämpfereinlass aufweist, an den sich ein Strömungskanal einer Kanallänge l anschließt, sodass der Strömungskanal mittels dem Schalldämpfereinlass an einen Auslass eines Brennraumes des Zweitaktmotors anbringbar ist, wobei der Strömungskanal am dem Schalldämpfereinlass gegenüberliegenden Kanalende in eine erste Kammer der Tiefe t mündet, wobei eine zweite Kammer vorgesehen ist, in die Abgas durch einen vom Strömungskanal abgezweigten Hauptauslass einströmt und aus der das Abgas durch einen Auslass ausströmt, wobei der Strömungskanal zwischen dem Schalldämpfereinlass und der ersten Kammer derart strömungsgünstig ausgeformt ist, dass das in den Schalldämpfereinlass einströmende Abgas aufgrund seiner Massenträgheit überwiegend in die erste Kammer einströmt und nach einer Befüllung der ersten Kammer wieder zurückströmt, und sich hierdurch in Richtung zum Brennraum ein Gegendruck bildet, gemäß dem Oberbegriff des Anspruches 1.

## Stand der Technik

Aus der DE 20 2008 005 168 U1 ist ein gattungsbildender Schalldämpfer in Anordnung an einem Zweitaktmotor gezeigt, der für ein Motorarbeitsgerät wie ein Garten- und Grünanlagenpflegegerät oder ein Handwerkzeug wie eine Kettensäge, eine Handkreissäge oder ein Trennschleifer oder für ein Kleinkraftrad, einen Bootsmotor und dergleichen Verwendung findet. Der gezeigte Schalldämpfer verfügt über einen Schalldämpfereinlass, der mit dem Auslass des Brennraumes des Zweitaktmotors verbunden ist. An den Schalldämpfereinlass schließt sich ein Strömungskanal an, der über ein Kanalende in eine erste Kammer mündet. Der Strömungskanal und die erste Kammer sind beispielhaft durch eine größere zweite Kammer umschlossen, wobei die erste Kammer auch außerhalb der zweiten Kammer angeordnet sein kann. Um das Abgas nach der Abgasrückströmung in Richtung zum Schalldämpfereinlass abströmen zu lassen, ist eine Strömungsverbindung in Form eines Hauptauslasses gezeigt, der sich rechtwinklig von der Kanalströmungsrichtung weg erstreckt und in die zweite Kammer mündet. Schließlich kann das Abgas die zweite Kammer durch einen Auslass verlassen und ins Freie gelangen.

Beim Bau derartiger Schalldämpfer wird grundsätzlich das Ziel verfolgt, den Strömungskanal zwischen dem Brennraum des Zweitaktmotors und der ersten Kammer derart strömungsgünstig auszuformen, dass das aus dem Auslass des Brennraumes strömende Abgas aufgrund seiner Massenträgheit überwiegend zunächst in die erste Kammer einströmt und nicht bereits durch den Hauptauslass in die zweite Kammer eintritt. Durch das Einströmen des Abgases in die erste Kammer wird diese befüllt, bis das Abgas in der ersten Kammer einen Überdruck bildet. Anschließend strömt das Abgas aufgrund des Überdrucks von der ersten Kammer durch den Strömungskanal zurück in Richtung zum Schalldämpfereinlass. Dadurch kann sich in Richtung zum Brennraum des Zweitaktmotors eine Gasbarriere in Form eines Gasgegendruckes bilden, durch den ein schädlicher Nachauslass von unverbranntem Kraftstoff-Luftgemisch verringert oder sogar vermieden wird. Auch bereits in den Schalldämpfer gelangtes unverbranntes Kraftstoff-Luftgemisch kann durch das rückströmende Abgas in den Brennraum des Zweitaktmotors zurück befördert werden. Durch dieses Prinzip können die Abgaswerte beim Betrieb des Zweitaktmotors erheblich verbessert werden, ferner kann der Verbrauch an Kraftstoff verringert werden.

Aus der US 2002/0152747 A1 ist ein weiterer Schalldämpfer für ein Motorarbeitsgerät bekannt, und der Schalldämpfer weist lediglich eine erste Kammer auf, die als Schalldämpfer wirkt und das Abgas kann die erste Kammer durch einen Auslass verlassen. Im Strömungskanal zwischen dem Auslass des Brennraumes des Zweitaktmotors und der ersten Kammer ist ein Resonanzrohr angebracht, das sich rechtwinklig zur Kanalströmungsrichtung des Strömungskanals weg erstreckt. Das Resonanzrohr ist endseitig geschlossen ausgebildet, und beim Betrieb des Zweitaktmotors kann eine periodische Druckwelle im Resonanzrohr gebildet werden, die am geschlossenen Ende des Resonanzrohrs reflektiert und wieder in Richtung zum Strömungskanal zurück strömt. Damit wird der Effekt genutzt, dass durch die rückströmende Druckwelle gegen den Auslass des Brennraumes ein Gegendruck gebildet wird, um zu verhindern, dass unverbranntes Kraftstoff-Luftgemisch in den Schalldämpfer gelangt, oder es kann sogar bereits in den Strömungskanal eingetretenes Kraftstoff-Luftgemisch in den Brennraum zurück befördert werden. Jedoch entsteht der Nachteil, dass das Resonanzrohr Längen erfordert, die etwa zwischen 40 cm bis 70 cm liegen.

## Offenbarung der Erfindung

Um eine Anordnung aus Zweitaktmotor und einem Schalldämpfer für eine Vielzahl von handgehaltenen Motorarbeitsgeräten zu qualifizieren, ist es wünschenswert, einen Schalldämpfer derart weiterzubilden, dass dieser trotz kleiner geometrischer Abmessungen einen periodisch wirkenden Gegendruck am Auslass des Brennraumes des Zweitaktmotors ermöglicht.

Diese Aufgabe wird ausgehend von einem Schalldämpfer für einen Zweitaktmotor eines Motorarbeitsgerätes gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Gesamtlänge $L_{ges}$ aus der Kanallänge l und der Tiefe t kleiner ist als die berechnete Länge L nach:

$$L = \frac{c_s \cdot \varphi}{12 \cdot n}$$

in Meter mit

$c_s$ = Schallgeschwindigkeit des heißen Abgases (m/s)
$\varphi$ = Kurbelwinkel in Grad von Auslass-öffnet bis Überströmkanalschließt
n = Drehzahl in 1/min.

Ausgehend von der dargestellten Berechnungsgrundlage zur Bestimmung der Gesamtlänge, die als Resonanzlänge für ein Resonanzrohr eines Schalldämpfers dienen kann, macht sich die Erfindung den Gedanken zunutze, die Gesamtlänge kleiner auszugestalten, als die Bestimmung der Gesamtlänge nach dem Stand der Technik bekannt ist. Der mathematische Zusammenhang basiert auf der Schallgeschwindigkeit des heißen Abgases und dem Kurbelwinkel in Grad vom Öffnen des Auslasses bis zum Schließen des Überströmkanals bei einer Drehzahl in 1/min. Erfindungsgemäss entspricht die Gesamtlänge einen Wert von 1/8 bis 1/3 der berechneten Länge L. Die Reduzierung der Gesamtlänge aus Kanallänge und Tiefe der ersten Kammer, die als Strömungslänge dient, kann nur durch den Schalldämpfer der vorbezeichneten Bauart ermöglicht werden. Diese Bauart unterscheidet sich durch die Verwendung einer ersten Kammer am Ende des Strömungskanals darin, dass die erste Kammer ein Zwischenvolumen bildet, und in diesem Zwischenvolumen kann das Abgas einen vorübergehenden Überdruck bilden, um nach Bildung des Überdrucks durch den Strömungskanal wieder in Richtung zum Schalldämpfereinlass zurückzuströmen. Durch entsprechende Wahl des Volumens der ersten Kammer und des Strömungskanals kann ein Strömungsprinzip mit Bildung einer Gasbarriere vor dem Auslass des Zylinders erfindungsgemäß trotz einer Verkleinerung der bekannten zu berechnenden Länge nach der angegebenen Formel aufrecht erhalten bleiben. Das Prinzip des vorliegenden Schalldämpfers unterscheidet sich vom Resonanzprinzip des gemäß dem Stand der Technik dargestellten Resonanzrohres darin, dass nicht eine Druckwelle durch eine Abgassäule in Richtung zu einem Säulenende wandert und am Säulenende reflektiert wird, um wieder durch die Säule zurückzuwandern, um beispielsweise am Schalldämpfereinlass einen Druckpuls zu bilden, sondern es liegt eine Abgasströmung vor. Das vorliegende Prinzip des Schalldämpfers macht sich hingegen ein Volumen zunutze, das durch die erste Kammer gebildet ist und sich am Ende des Strömungskanals befindet. Dabei konnte festgestellt werden, dass bei entsprechender Wahl des Volumens und bei entsprechender Wahl der geometrischen, insbesondere strömungsgünstigen Ausgestaltung des Strömungskanals, die Gesamtlänge kleiner gewählt werden kann, als die nach dem Stand der Technik zu berechnende Länge nach der angegebenen mathematischen Beziehung. Damit wird der Vorteil erreicht, dass die baulichen Abmaße des Schalldämpfers trotz Beibehaltung der Gasbarriere vor dem Auslass des Zylinders wesentlich kleiner gehalten werden können, und der Schalldämpfer kann bei Zweitaktmotoren für Motorarbeitsgeräte Verwendung finden, die insbesondere für handbetriebene Garten- und Grünanlagenpflegegeräte, Handwerkzeuge wie Kettensägen, Kreissägen oder Trennschleifer Verwendung finden können.

Vorteilhafterweise kann die Gesamtlänge einen Wert von 1/8 bis 1/3 der berechenbaren Länge entsprechen. Betrifft die berechenbare Länge beispielsweise ein Maß von bis zu 60 cm, so kann die Gesamtlänge aus der Kanallänge I des Strömungskanals und der Tiefe t der ersten Kammer einen Wert von etwa 7,5 cm bis 20 cm betragen. Werden die Zweitaktmotoren bei Drehzahlen betrieben, die beispielsweise 10.000 1/min betragen oder sogar darüber liegen, so kann sich die Gesamtlänge weiter verkleinern, und beispielsweise 7 cm oder darunter betragen.

Mit besonderem Vorteil kann die Gesamtlänge derart bemessen sein, dass das Verhältnis des Zahlenwertes der Gesamtlänge in Zentimetern zum Zahlenwert des Hubvolumens des Zweitaktmotors in Kubikzentimetern 0,15 bis 0,35 beträgt, insbesondere kleiner ist als 0,15 bis 0,35. Weist der Zweitaktmotor beispielsweise ein Hubvolumen von 50 cm$^3$ auf, so kann die Gesamtlänge des Strömungskanals und der Tiefe der ersten Kammer einen Wert von beispielsweise 17,5 cm bis 7,5 cm betragen, und insbesondere darunter liegen.

Der Strömungskanal kann gerade ausgeführt sein und sich entlang einer Kanalströmungsrichtung erstrecken, und die erste Kammer ist derart am Kanalende des Strömungskanals angeordnet, dass sich die Raummitte der ersten Kammer etwa in Verlängerung der Kanalströmungsrichtung befindet. Alternativ kann der Strömungskanal gebogen ausgeführt sein oder es befindet sich zwischen dem Auslass des Brennraumes und dem Einlass des Strömungskanals ein Krümmerelement, wobei ferner die erste Kammer eine Raummitte aufweisen kann, die nicht in der Kanalströmungsrichtung liegt, beste Ergebnisse zur Bildung des erforderlichen Strömungsprinzips im Abgas wird jedoch erreicht, wenn die Raummitte der ersten Kammer in Verlängerung der Kanalströmungsrichtung angeordnet ist und wenn der Strömungskanal gerade ausgebildet ist. Insbesondere kann der Strömungskanal die gleiche Erstreckungsrichtung aufweisen, wie auch der Auslass im Zylinder des Zweitaktmotors.

Der Strömungskanal kann einen runden Querschnitt aufweisen, wobei die erste Kammer etwa kugelförmig ausgebildet ist. Insbesondere durch die kugelförmige Ausbildung der ersten Kammer kann das Strömungsprinzip des Abgases über einen breiteren Drehzahlbereich des Zweitaktmotors genutzt werden, wobei die erste Kammer alternativ eine zapfenförmige, eine doppelkegelförmige oder eine elliptische Gestalt aufweisen kann, und die Hauptachse der Ellipse kann mit der Kanalströmungsrichtung zusammenfallen. Alternativ kann die erste Kammer auch quaderförmig ausgebildet sein oder die erste Kammer ist zylinderförmig ausgestaltet, und die Rotationsachse des Zylinders fällt mit der Kanalströmungsrichtung des Strömungskanals zusammen.

Nach einer weiteren vorteilhaften Ausführungsform kann der Strömungskanal beispielsweise abschnittweise in wenigstens einen ersten Teilkanal und einen zweiten Teilkanal aufgeteilt sein, wobei in zumindest einem Teilkanal wenigstens ein Ventil vorgesehen ist. Insbesondere kann in jedem der Teilkanäle ein Ventil angeordnet sein, und beispielsweise durch den ersten Teilkanal kann das Abgas vom Schalldämpfereinlass in die erste Kammer strömen, und durch den zweiten Teilkanal kann das Abgas von der ersten Kammer zurück in Richtung zum Schalldämpfereinlass strömen. Damit kann die erste Kammer in einer Vorzugsrichtung mit Abgas durchströmt werden, insbesondere wenn der erste Teilkanal in örtlicher Trennung vom zweiten Teilkanal an die erste Kammer angeschlossen ist. Das zumindest eine Ventil kann auf verschiedene Weise ausgeführt sein, beispielsweise als Tesla-Ventil, als Flatterventil, als Tellerventil und/oder als Klappenventil.

Im Strömungskanal und/oder in der ersten Kammer kann ferner ein Katalysator vorgesehen sein, sodass neben der Verbesserung der Emissionswerte des Motorarbeitsgerätes durch die strömungsgünstige Ausgestaltung des Strömungskanals und den dadurch erzielten Abgasströmungseffekt eine weitere Verbesserung der Abgaswerte dadurch erzielt werden kann, dass in den Schalldämpfer der vorbezeichneten Bauart wenigstens ein Katalysator integriert wird. Damit die Abgase des Zweitaktmotors nicht ungereinigt in die Umwelt gelangen, ist zusätzlich zur strömungsgünstigen Ausformung des Strömungskanals und den damit hervorgerufenen Effekten im Schalldämpfer zumindest ein Katalysator angeordnet, sodass die Abgase teilweise oder ganz durch den Katalysator strömen, bevor diese den Schalldämpfer durch den Auslass verlassen und ins Freie treten. Mit besonderem Vorteil kann der Katalysator als Wabenkatalysator ausgeführt sein und im Strömungskanal oder in der zweiten Kammer angeordnet werden. Alternativ kann der Katalysator als Gitterkatalysator ausgeführt sein, und vorzugsweise in der ersten Kammer angeordnet werden.

Eine weitere Verbesserung des Schalldämpfers wird durch die Maßnahme erreicht, dass das Verhältnis des Volumens der ersten Kammer zum Gesamtvolumen des Schalldämpfers ein 1/40 bis 1/2 beträgt. Damit können die am Schalldämpfer beteiligten Volumina, derart optimiert werden, dass unter Beibehaltung des Abgasströmungsprinzips des Schalldämpfers eine möglichst gute Geräuschminderung beim Betrieb des Motorarbeitsgerätes erreicht wird. Dabei hat sich gezeigt, dass bei einem Volumen der ersten Kammer im Verhältnis zum Gesamtvolumen des Schalldämpfers von einem 1/40 bis 1/2 die Druckschwingungen am Auslass des Schalldämpfers besonders stark abnehmen, sodass das Geräusch beim Betrieb des Motorarbeitsgerätes leiser ausgelegt werden kann.

## Kurze Beschreibung der Zeichnungen

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:

Figur 1 ein Ausführungsbeispiel eines Schalldämpfers mit den Merkmalen der vorliegenden Erfindung und
Figur 2 das Ausführungsbeispiel des Schalldämpfers mit einem Strömungskanal, der einen ersten und einen zweiten Teilkanal umfasst.

## Bevorzugtes Ausführungsbeispiel der Erfindung

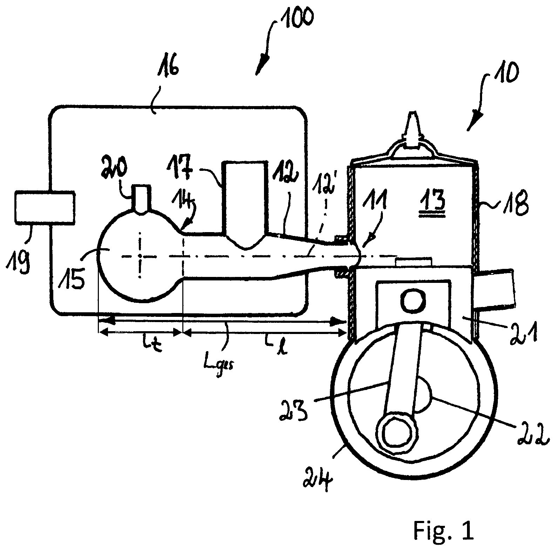

Figur 1 zeigt einen Schalldämpfer 100 in Anordnung an einem Zweitaktmotor 10, wie dieser für ein handgehaltenes Motorarbeitsgerät zum Einsatz kommen kann. Der Zweitaktmotor 10 weist einen Zylinder 18 auf, in dem ein Brennraum 13 gebildet ist. Der Brennraum 13 ist beweglich begrenzt durch einen Kolben 21, der über eine Pleuel 23 mit einer Kurbelwelle 22 zur Bildung eines Kurbeltriebes verbunden ist, und die Kurbelwelle 22 ist in einem Kurbelgehäuse 24 gelagert. In der Wandung des Zylinders 18 ist ein Auslass angeordnet, an dem der Schalldämpfer 100 über einen Schalldämpfereinlass 11 in nicht näher gezeigter Weise angeflanscht ist. Befindet sich der Kolben 21 in der gezeigten Position des unteren Totpunktes, so gibt der Kolben 21 den Auslass des Brennraumes 13 frei, und Abgas kann vom Brennraum 13 durch den Schalldämpfereinlass 11 in den Schalldämpfer 100 gelangen. An den Schalldämpfereinlass 11 schließt sich ein Strömungskanal 12 an, der mit einem dem Schalldämpfereinlass 11 gegenüberliegenden Kanalende 14 in eine erste Kammer 15 mündet. Ferner weist der Schalldämpfer 100 eine zweite Kammer 16 auf, die größer ausgebildet ist als die erste Kammer 15 und die die erste Kammer 15 beispielhaft vollständig sowie ebenfalls einen Teil des Strömungskanals 12 umschließt.

Das in den Schalldämpfereinlass 11 eintretende Abgas kann zunächst wenigstens zum größeren Teil in die erste Kammer 15 gelangen, wobei am Strömungskanal 12 ein Hauptauslass 17 angeordnet ist, und das Abgas kann aus dem Strömungskanal 12 durch den Hauptauslass 17 in die zweite Kammer 16 gelangen. Ferner besitzt die erste Kammer 15 einen optionalen Nebenauslass 20, sodass Abgas auch aus der ersten Kammer 15 direkt in die zweite Kammer 16 einströmen kann. Das Abgas kann durch einen Auslass 19, der in der Wandung der zweiten Kammer 16 eingebracht ist, den Schalldämpfer 100 verlassen.

Der Strömungskanal 12 erstreckt sich in gerader Ausbildung zwischen der ersten Kammer 15 und dem Schalldämpfereinlass 11, und ist damit derart strömungsgünstig ausgeformt, dass das in den Schalldämpfereinlass 11 einströmende Abgas aufgrund seiner Massenträgheit überwiegend in die erste Kammer 15 einströmt und in dieser einen Überdruck erzeugt. Nach einer Befüllung der ersten Kammer 15 kann das Abgas wieder in Richtung zum Schalldämpfereinlass 11 zurückströmen, und hierdurch gegen den Brennraum 13 einen Gegendruck bilden. Damit wird vermieden, dass Kraftstoff-Luftgemisch unverbrannt in den Schalldämpfer 100 gelangt oder bereits in den Schalldämpfer 100 eingetretenes Kraftstoff-Luftgemisch wird in den Brennraum 13 zurückgedrückt. Erst nach Rückströmung des Abgases gegen den Auslass des Brennraumes 13 kann das Abgas den Strömungskanal 12 beziehungsweise die erste Kammer 15 durch einen Hauptauslass 17 verlassen und in die zweite Kammer 16 eintreten und die Kammer 16 über den Auslass 19 verlassen.

Der Strömungskanal 12 erstreckt sich entlang einer Kanalströmungsrichtung 12', und der Strömungskanal 12 ist mit einem runden Querschnitt rotationssymmetrisch um die Kanalströmungsrichtung 12' ausgebildet. Die erste Kammer 15 ist kugelförmig ausgebildet und besitzt eine Raummitte, die in Verlängerung der Kanalströmungsrichtung 12' liegt, sodass sich die kugelförmige erste Kammer 15 in Kanalströmungsrichtung 12' an den Strömungskanal 12 anschließt. Der Strömungskanal 12 ist mit einer Kanallänge I ausgeführt, und die Tiefe der ersten Kammer 15 in Richtung zur Kanalströmungsrichtung 12' ist mit t angegeben. Die sich ergebende Gesamtlänge $L_{ges}$ wird durch die Summe der Kanallänge I und der Tiefe t der Kammer 15 gebildet, und die Gesamtlänge $L_{ges}$ entspricht einer optimalen Abgasströmungslänge nach dem Auslass des Zylinders 18, die das Abgas entlang der Kanalströmungsrichtung 12' strömen kann.

Die Gesamtlänge $L_{ges}$ kann erfindungsgemäß kleiner sein als die berechenbare Länge L nach:

$$L = \frac{c_s \cdot \varphi}{12 \cdot n}$$

in Meter mit

c_s = Schallgeschwindigkeit des heißen Abgases (m/s)

φ = Kurbelwinkel in Grad vom Öffnen des Auslasses bis zum Schießen des Überströmkanals

n = Drehzahl in 1/min.

Beträgt die Schallgeschwindigkeit $c_s$ des heißen Abgases beispielsweise 500 m/s, und beträgt der Kurbelwinkel φ in Grad, über dem der Auslass des Brennraumes 13 geöffnet ist, 100 Grad, so kann bei einer Drehzahl n von 10.000 1/min eine berechnete Gesamtlänge L von 0,42 Metern bestimmt werden, sodass die Gesamtlänge $L_{ges}$ erfindungsgemäß kleiner gewählt wird. Erfindungsgemäss ist die Gesamtlänge $L_{ges}$ kleiner als 1/8 bis 1/3 der berechneten Länge L, und kann Werte von 5,25 bis 14 cm aufweisen.

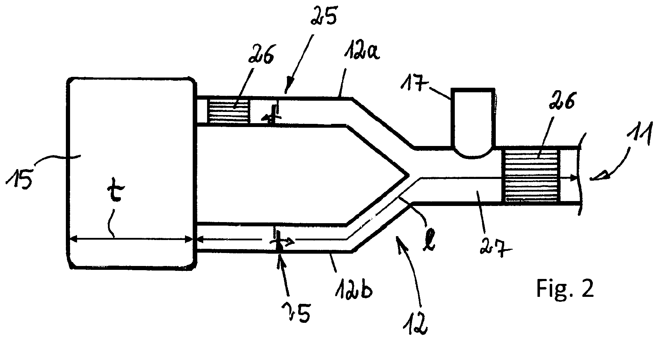

In Figur 2 ist der Strömungskanal 12 und die erste Kammer 15 des Schalldämpfers gezeigt, und gemäß diesem Ausführungsbeispiel ist der Strömungskanal 12 in einen ersten Teilkanal 12a und in zweiten Teilkanal 12b aufgeteilt, und die Teilkanäle 12a und 12b münden beabstandet zueinander in die erste Kammer 15, die beispielhaft einen rechteckigen Querschnitt besitzt. Die Kanallänge I bestimmt sich durch die jeweilige Länge des Teilkanals 12a und 12b sowie der Länge eines Anschlussstückes 27, und der Hauptauslass 17 ist beispielhaft am Anschlussstück 27 angeordnet. Die Teilkanäle 12a und 12b erstrecken sich dabei zwischen dem Anschlussstück 27 und der ersten Kammer 15, und die Tiefe der ersten Kammer 15 ist mit der Tiefe t angegeben.

In den Kanälen sind Ventile 25 beispielhaft als Klappenventile ausgeführt gezeigt, und die Öffnungsrichtung der Ventile 25 ist derart bestimmt, dass der erste Teilkanal 12a vom Schalldämpfereinlass 11 in Richtung zur ersten Kammer 15 durchströmt wird, und der zweite Teilkanal 12b wird von der ersten Kammer 15 in Richtung zum Schalldämpfereinlass 11 durchströmt. Weiterhin beispielhaft sind Katalysatoren 26 gezeigt, und ein erster Katalysator 26 befindet sich im Anschlussstück 27 und ein zweiter Katalysator 26 befindet sich beispielhaft gezeigt im ersten Teilkanal 12a und kann als eine zusätzliche und vorzugsweise als eine alternative Anordnung gesehen werden. Das Schalldämpferprinzip kann auch mit einem verzweigten Strömungskanal 12 umgesetzt werden, wobei nach einer weiteren Alternative der erste Teilkanal 12a in Kanalströmungsrichtung 12' verlaufen kann, bis dieser in die erste Kammer 15 mündet, und der zweite Teilkanal 12b kann abweichend von der Kanalströmungsrichtung 12' ausgebildet sein, und somit einen Nebenkanal zur Rückströmung des Abgases von der ersten Kammer 15 in Richtung zum Schalldämpfereinlass 11 bilden.

Die Erfindung beschränkt sich in ihrer Ausführung nicht auf das vorstehend an-gegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten und räumliche Anordnungen, können sowohl für sich als auch in den verschiedensten Kombinationen erfindungswesentlich sein.

**Bezugszeichenliste**

100 Schalldämpfer

10 Zweitaktmotor
11 Schalldämpfereinlass
12 Strömungskanal
12' Kanalströmungsrichtung
12a erster Teilkanal
12b zweiter Teilkanal
13 Brennraum
14 Kanalende
15 erste Kammer
16 zweite Kammer
17 Hauptauslass
18 Zylinder
19 Auslass
20 Nebenauslass
21 Kolben
22 Kurbelwelle
23 Pleuel
24 Kurbelgehäuse
25 Ventil
26 Katalysator
27 Anschlussstück

I Kanallänge
t Tiefe der Kammer
L berechnete Länge
$L_{ges}$ Gesamtlänge aus I und t

**Patentansprüche**

1. Schalldämpfer (100) für einen Zweitaktmotor (10) eines Motorarbeitsgerätes, insbesondere für ein handbetriebenes Motorarbeitsgerät wie ein Garten- und Grünanlagenpflegegerät, ein Handwerkzeug wie eine Kettensäge, eine Handkreissäge oder ein Trennschleifer oder für ein Kleinkraftrad, einen Bootsmotor und dergleichen, wobei

- der Schalldämpfer einen Schalldämpfereinlass (11) aufweist, an den sich ein Strömungskanal (12) einer Kanallänge (I) anschließt, sodass
- der Strömungskanal (12) mittels dem Schalldämpfereinlass (11) an einen Auslass eines Brennraumes (13) des Zweitaktmotors (10) anbringbar ist,
- wobei der Strömungskanal (12) am dem Schalldämpfereinlass (11) gegenüberliegenden Kanalende (14) in eine erste Kammer (15) der Tiefe (t) mündet,
- wobei ferner eine zweite Kammer (16) vorgesehen ist,

- in die Abgas durch einen vom Strömungskanal (12) abgezweigten Hauptauslass (17) einströmt und aus der das Abgas durch einen Auslass (19) ausströmt, wobei

der Strömungskanal (12) zwischen dem Schalldämpfereinlass (11) und der ersten Kammer (15) derart strömungsgünstig ausgeformt ist, dass das in den Schalldämpfereinlass (11) einströmende Abgas aufgrund seiner Massenträgheit überwiegend in die erste Kammer (15) einströmt und nach einer Befüllung der ersten Kammer (15) wieder zurück strömt, und sich hierdurch in Richtung zum Brennraum (13) ein Gegendruck bildet,

**dadurch gekennzeichnet, dass** die Gesamtlänge ($L_{ges}$) aus der Kanallänge (I) und der Tiefe (t) einem Wert von 1/8 bis 1/3 der berechneten Länge (L) entspricht und dass die Gesamtlänge ($L_{ges}$) kleiner ist als die berechnete Länge (L) nach:

$$L = \frac{c_s \cdot \varphi}{12 \cdot n}$$

in Meter mit

$c_s$ = Schallgeschwindigkeit des heißen Abgases (m/s)
$\varphi$ = Kurbelwinkel in Grad von Öffnen des Auslasses bis zum Schließen des Überströmkanals
n = Drehzahl in 1/min.

2. Schalldämpfer nach Anspruch 1, **dadurch gekennzeichnet, dass** die Gesamtlänge ($L_{ges}$) derart bemessen ist, dass das Verhältnis des Zahlenwertes der Gesamtlänge ($L_{ges}$) in Zentimetern zum Zahlenwert des Hubvolumens des Zweitaktmotors (10) in Kubikzentimetern 0,15 bis 0,35 beträgt, insbesondere kleiner ist als 0,15 bis 0,35.

3. Schalldämpfer nach Anspruch 1 oder 2, **dadurch gekennzeichnet, dass** sich der Strömungskanal (12) entlang einer Kanalströmungsrichtung (12') erstreckt, und die erste Kammer (15) ist derart am Kanalende (14) des Strömungskanals (12) angeordnet, dass sich die Raummitte der ersten Kammer (15) etwa in Verlängerung der Kanalströmungsrichtung (12') befindet.

4. Schalldämpfer nach einem der vorgenannten Ansprüche, **dadurch gekennzeichnet, dass** der Strömungskanal (12) einen runden Querschnitt aufweist, wobei die erste Kammer (15) etwa kugelförmig ausgebildet ist.

5. Schalldämpfer nach einem der vorgenannten Ansprüche, **dadurch gekennzeichnet, dass** der Strömungskanal (12) wenigstens abschnittsweise in mindestens einen ersten Teilkanal (12a) und einen zweiten Teilkanal (12b) aufgeteilt ist, wobei in wenigstens einem Teilkanal zumindest ein Ventil (25) vorgesehen ist.

**6.** Schalldämpfer nach einem der vorgenannten Ansprüche, **dadurch gekennzeichnet, dass** im Strömungskanal (12) und/oder in der ersten Kammer (15) ein Katalysator (26) angeordnet ist.

**7.** Schalldämpfer nach einem der vorgenannten Ansprüche, **dadurch gekennzeichnet, dass** das Verhältnis des Volumens der ersten Kammer (15) zum Gesamtvolumen des Schalldämpfers 1/40 bis 1/2 beträgt.

**Claims**

**1.** Silencer (100) for a two-stroke motor (10) of a power tool, in particular for a hand-operated power tool such as a garden and park maintenance device, a hand tool such as a chain saw, a hand-held circular saw or an angle grinder or for a moped, a boat engine or the like, wherein

- the silencer has a silencer inlet (11) to which adjoins a flow channel (12) of a channel length (I), so that
- by means of the silencer inlet (11) the flow channel (12) can be connected to an outlet of a combustion chamber (13) of the two-stroke motor (10),
- wherein the flow channel (12) at the channel end (14) opposite the silencer inlet (11) opens out into a first chamber (15) of depth (t),
- wherein a second chamber (16) is also provided,
- into which exhaust gas flows through a main outlet (17) branched from the flow channel (12) and from which the exhaust gas flows out through an outlet (19), wherein the flow channel (12) between the silencer inlet (11) and the first chamber (15) is so flow-beneficially designed, that due to its mass inertia the exhaust gas flowing into the silencer inlet (11) predominantly flows into the first chamber (15) and after filling the first chamber (15) flows back again, thereby creating a counterpressure in the direction of the combustion chamber (13), **characterized in that** the total length ($L_{ges}$) of channel length (I) and the depth (t) corresponds to a value of 1/8 to 2/3 of the calculated length (L) and that the total length ($L_{ges}$) is smaller than the calculated length (L) according to

$$L = \frac{c_s \cdot \varphi}{12 \cdot n}$$

in meter with

$C_s$ = Speed of sound of the hot exhaust gas (m/s)
$\varphi$ = Crank angle in degree from opening of the outlet to closing of the overflow channel
n=Speed in 1/min.

**2.** Silencer according to claim 1, **characterized in that** the total length ($L_{ges}$) is such that the ratio of the numerical value of the total length ($L_{ges}$) in centimeters to the numerical value of the capacity of the two-stroke motor (10) in cubic centimeters is 0.15 to 0.35, in particular less than 0.15 to 0.35.

**3.** Silencer according to claim 1 or 2, **characterized in that** the flow channel (12) extends along a channel flow direction (12'), and the first chamber (15) is arranged at the channel end (14) of the flow channel (12) in such a way that the center of the first chamber (15) is approximately in the extension of the channel flow direction (12').

**4.** Silencer according to one of the preceding claims, **characterized in that** the flow channel (12) has a round cross-section, wherein the first chamber (15) is configured approximately spherical.

**5.** Silencer according to one of the preceding claims, **characterized in that** the flow channel (12) at least in sections is divided into at least a first partial channel (12a) and a second partial channel (12b), wherein at least one valve (25) is provided in at least one partial channel.

**6.** Silencer according to one of the preceding claims, **characterized in that** a catalytic converter (26) is arranged in the flow channel (12) and/or in the first chamber (15).

**7.** Silencer according to one of the preceding claims, **characterized in that** the ratio of the volume of the first chamber (15) to the total volume of the silencer is 1/40 to 1/2.

**Revendications**

**1.** Silencieux (100) pour un moteur à deux temps (10) d'un outil de travail motorisé, en particulier pour un outil de travail motorisé à fonctionnement manuel tel qu'un outil d'entretien de jardins et d'espaces verts, un outil à main tel qu'une scie à chaîne, une scie circulaire portative ou une tronçonneuse à meule ou pour un cyclomoteur, un moteur de bateau et similaires, dans lequel

- le silencieux présente une entrée de silencieux (11) qui est en jonction avec un canal d'écoulement (12) d'une longueur de canal (I), de sorte que
- le canal d'écoulement (12) peut être relié au moyen de l'entrée de silencieux (11) à une sortie d'une chambre de combustion (13) du moteur à deux temps (10),
- dans lequel le canal d'écoulement (12) débouche au niveau de l'extrémité de canal (14) située vis-à-vis de l'entrée de silencieux (11) dans une première chambre (15) de profondeur (t),
- dans lequel on prévoit en outre une deuxième chambre (16)
- dans laquelle du gaz d'échappement afflue à travers une sortie principale (17) dérivée du canal d'écoulement (12) et de laquelle le gaz d'échappement s'échappe à travers une sortie (19), dans lequel

le canal d'écoulement (12) est réalisé entre l'entrée de silencieux (11) et la première chambre (15) d'une manière favorable à l'écoulement telle, que le gaz d'échappement affluant par l'entrée de silencieux (11) afflue essentiellement dans la première chambre (15) en raison de son inertie et reflue de nouveau après un remplissage de la deuxième chambre (15) et que de cette manière, une contre-pression est formée en direction vers la chambre de combustion (13),

**caractérisé en ce que** la longueur totale ($L_{ges}$) de la longueur du canal (I) et de la profondeur (t) correspond à une valeur de 1/8 à 1/3 de la longueur calculée (L) et **en ce que** la longueur totale ($L_{ges}$) est inférieure à la longueur calculée (L) conformément à :

$$L = \frac{c_s \cdot \varphi}{12 \cdot n}$$

en mètres avec

$C_s$ = vitesse du son du gaz d'échappement chaud (m/s)
$\phi$ = angle de vilebrequin en degrés pour ouvrir la sortie jusqu'à la fermeture du canal de trop plein
n = vitesse de rotation en 1/min.

2. Silencieux selon la revendication 1, **caractérisé en ce que** la longueur totale ($L_{ges}$) est mesurée d'une façon telle, que le rapport entre la valeur numérique de la longueur totale ($L_{ges}$) en centimètres et la valeur numérique de la cylindrée du moteur à deux temps (10) en centimètres-cubes est de 0,15 à 0,35, en particulier inférieur à 0,15 à 0,35.

3. Silencieux selon la revendication 1 ou 2, **caractérisé en ce que** le canal d'écoulement (12) s'étend le long d'une direction d'écoulement de canal (12') et **en ce que** la première chambre (15) est disposée à l'extrémité de canal (14) du canal d'écoulement (12) d'une façon telle, que le centre spatial de la première chambre (15) se trouve à peu près en prolongement de la direction d'écoulement de canal (12').

4. Silencieux selon l'une des revendications susmentionnées, **caractérisé en ce que** le canal d'écoulement (12) présente une section transversale ronde, dans lequel la première chambre (15) est réalisée à peu près de manière sphérique.

5. Silencieux selon l'une des revendications susmentionnées, **caractérisé en ce que** le canal d'écoulement (12) est divisé, au moins par tronçons, en au moins un premier canal partiel (12a) et un deuxième canal partiel (12b), dans lequel l'on prévoit au moins une soupape (25) dans au moins un canal partiel.

6. Silencieux selon l'une des revendications susmentionnées, **caractérisé en ce qu'**un catalyseur (26) est disposé dans le canal d'écoulement (12) et/ou dans la première chambre (15).

7. Silencieux selon l'une des revendications susmentionnées, **caractérisé en ce que** le rapport entre le volume de la première chambre (15) et le volume total du silencieux est de 1/40 à ½.

Fig. 1

Fig. 2

**IN DER BESCHREIBUNG AUFGEFÜHRTE DOKUMENTE**

**In der Beschreibung aufgeführte Patentdokumente**

- DE 202008005168 U1
- US 20020152747 A1